## Europäisches Patentamt
## European Patent Office
## Office européen des brevets

(19)

(11) Publication number: **0 105 764**
**B1**

(12) **EUROPEAN PATENT SPECIFICATION**

(45) Date of publication of patent specification: **10.12.86**

(51) Int. Cl.⁴: **B 60 T 15/06**

(21) Application number: **83306035.3**

(22) Date of filing: **05.10.83**

(54) **Improved brake valve.**

(30) Priority: **05.10.82 GB 8228411**

(43) Date of publication of application:
**18.04.84 Bulletin 84/16**

(45) Publication of the grant of the patent:
**10.12.86 Bulletin 86/50**

(84) Designated Contracting States:
**DE SE**

(56) References cited:
**DE-A-2 044 894**
**DE-B-1 063 047**
**FR-A-2 286 035**
**GB-A-1 466 296**

(73) Proprietor: **CLAYTON DEWANDRE COMPANY LIMITED**
**P.O. Box 9 Titanic Works**
**Lincoln, LN5 7JL (GB)**

(72) Inventor: **Christopher, Hugh Charles**
**32 Fiskerton Road**
**Cherry Willingham Lincoln (GB)**

(74) Representative: **Hartley, David et al**
**c/o Withers & Rogers 4 Dyer's Buildings Holborn**
**London, EC1N 2JT (GB)**

Courier Press, Leamington Spa, England.

EP 0 105 764 B1

## Description

This invention relates to a vehicle brake valve for controlling the fluid pressure in a fluid brake circuit.

In a vehicle braking system a problem which has been encountered is feedback from the vehicle to the driver and hence to the brake control pedal or lever, resulting in a low frequency oscillation in braking effort. This is particularly relevant to large commercial vehicles in which the bodywork, specifically the cab, has a relatively high centre of gravity and may be independently suspended on the vehicle chassis. Retardation of the vehicle causes the cab to tilt forwardly with the result that the driver, having applied pressure to the pedal finds it difficult to maintain the desired pressure as the brakes take effect. The problem may arise if the pedal is mounted relative to the chassis rather than the bodywork, or if the characteristics of the driver's seat cause an unwanted reaction to the braking effect. In an air brake system such oscillation between pressurisation and exhaust of the system has the side effect of depleting the pressurised air reservoir.

It is an object of this invention to remove or reduce such oscillatory feedback.

In accordance with the present invention we propose a dual concentric brake valve for controlling the fluid pressure in a primary and a secondary braking circuit, having a valve actuating member which is movable upon the application thereto of an input effort, inlet and exhaust valves operable in response to movement of the actuating member respectively to admit fluid under pressure to an outlet port for applying the brakes and to release fluid under pressure from the brake circuit to an exhaust, and a balancing piston responsive to differential pressure between the two circuits to match the pressure in the two circuits wherein fluid under pressure from the brake circuit flows via an exhaust passage passing through the balancing piston and forming at least a part of the flowpath between the outlet port and the exhaust (known from GB—A—1466296) characterised in that the valve comprises a variable restrictor which is connected with the actuating member to move the full input effort travel and moves within the exhaust passage thereby to restrict the flow of fluid from the brake circuit.

DE—B—1063047 proposes a valve in which a variable restriction is movable by a maximum amount equal to the valve travel, to introduce a resistance to flow effective not only on the outlet flow but also on the inlet flow.

In the valve of the present invention, the restrictor is connected with the valve actuating member, which may be for example connected directly to the brake pedal linkage to move the full input travel, so that in the case of a pressurised air system the escape of air from the system to the exhaust is limited provided the brake pedal remains at least partly depressed.

Such a restriction has the effect of putting a degree of lag in the response of the vehicle brakes to a reduction in pedal force, with the result that the oscillatory feedback effect is largely prevented.

In the preferred embodiment of the invention, the dual concentric valve may be substantially as described in our earlier British Patent specification No. 1,466,296, in which the control passage in the balancing piston through which fluid (air) is exhausted from the primary circuit, is partly blocked by a plunger to restrict the escape of fluid from the primary circuit whilst the brake pedal is depressed. The flow of pressurised fluid from a reservoir to the system on application of the brakes is not restricted, so that the speed and progression with which the brakes respond to applied force on the pedal is substantially unaffected. Action of the balancing piston ensures that the comparatively slow release of pressure in the primary circuit caused by the restriction is matched in the secondary circuit.

The restrictor plunger does not limit the release of fluid from the system when the brake pedal is fully released.

Embodiments of the invention will now be described by way of example with reference to the accompanying drawings in which:

Figure 1 is a sectioned side elevation of a dual concentric brake valve for controlling the pressure of air in the primary and secondary braking circuits of a vehicle; and

Figure 2 is a view similar to Figure 1 but of a dual concentric brake valve having a modified restriction.

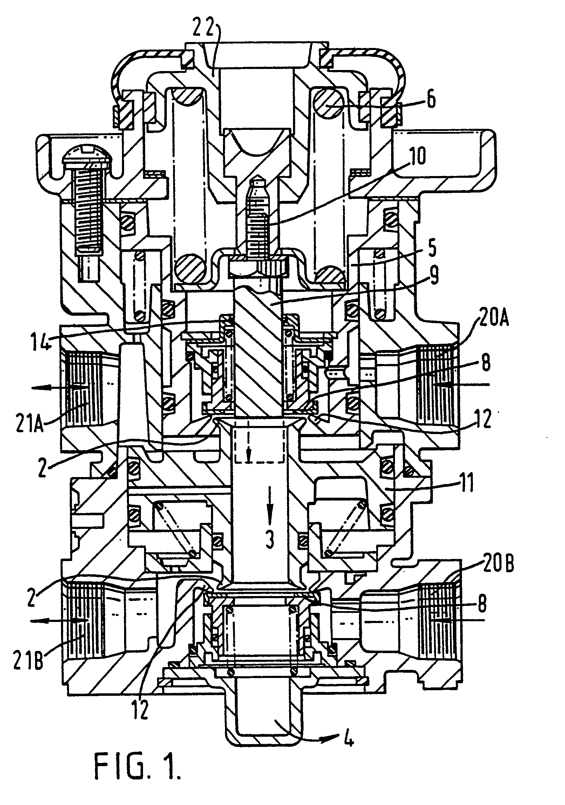

Referring to Figure 1 of the drawings the valve has a primary inlet port 20A and a secondary inlet port 20B, both of which are normally connected to a reservoir. A primary output port 21A and second output port 21B are provided for connection to primary and secondary brake circuits respectively, and an exhaust passage 3 communicates with an exhaust elbow 4.

In operation, depression of the valve actuating member 22 in response to movement of a brake pedal (not shown) causes the carrier 5 to move downwardly due to the fitted load of the travel spring 6. This brings the exhaust seats 2 into contact with their respective seats 8. The extension restrictor 9, attached to the input plunger by screw thread means 10, enters the centre balance piston 11 exhaust passage 3. Typically, the clearance between the external diameter of the extension restrictor 9 and the bore of the exhaust passage 3, is of the order of 0.010 ins (0.0254 cm) which provides a restriction (to the flow of fluid through the exhaust passage) approximately equivalent to a 3 mm diameter orifice. Further movement downwards will simultaneously open the primary and secondary inlet valves 12 and pressurise the output ports. As this travel increases the exhaust restrictor 9 penetrates deeper into the balance piston exhaust passage 3, so that by virtue of flow losses the resistance to flow increases with greater penetration.

On partial removal of the input load the inlet valves will seat and the exhaust valves will open, releasing the required amount of air. However, the time taken to obtain release now depends on the release orifice available, and how far the restrictor has penetrated the exhaust passageway 3. The size and shape of the restrictor plunger may be varied (to adjust the clearance and depth of penetration) to obtain a required release characteristic. It should be noted that as the output pressure is increased the degree of restriction (i.e. resistance to flow) upon exhaust is correspondingly increased.

As air is removed more slowly from the primary valve, the balance piston 11 will tend to move downwards due to air pressure imbalance, so as to cause a corresponding restriction at the secondary valve exhaust seat.

An "O" ring 14 is fitted around the exhaust restrictor which provides a dual purpose:

a) to prevent exhaust blow back to the spring chamber;

b) to provide negative hysteresis in the brake valve output pressure characteristic.

Since the restrictor 9 is coupled to the actuating member 22, the restrictor 9 is withdrawn from the passage 3 when the brake pedal is fully released to avoid any delay in brake release when braking is no longer required.

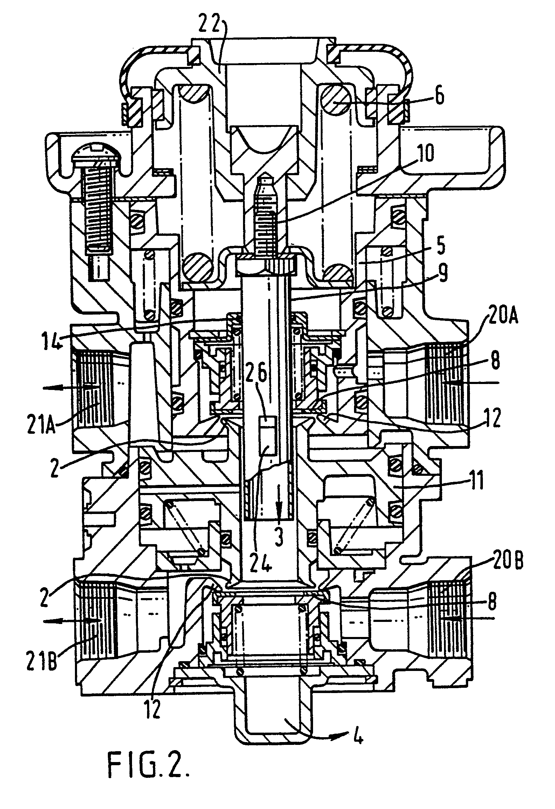

A second and preferred embodiment of the invention, shown in Figure 2, is also a dual concentric brake valve but has a restrictor 9 in the form of a tube. The tubular restrictor 9 is secured to the input plunger by screw thread means 10. Two rectangular windows 24 are formed in the tube walls diametrically opposite one another and are disposed, axially of the tube, such that in the retracted position shown, an upper part 26 of each window is exposed (i.e. projects out of the exhaust passage or bore 3 through the centre of the balancing piston) so providing, via the windows 24, the bore of the tubular restrictor and the exhaust passage 3, an exhaust flowpath which is substantially unrestricted i.e. equivalent to an 8 mm orifice or greater.

As shown in Figure 2, even in the retracted position, the tubular restrictor 9 is located and centred within the exhaust passage. Movement of the restrictor is therefore guided so avoiding problems due to any misalignment that might occur when, as in the embodiment of Figure 1, the restrictor engages the exhaust passage upon application of the input load.

When the brake pedal is depressed so that the actuating member, and tubular restrictor move downwardly from the retracted position, the exposed window (24) area is reduced, eventually to zero, so confining the exhaust flow to the annular clearance space which as in the embodiment of Figure 1 is preferably approximately equivalent to a 3 mm diameter orifice although it will be understood that the restriction may vary depending upon the requirement of a particular application. The greater the penetration of the tubular restrictor the greater the length of the clearance flow path to the windows 24 so that, further movement of the actuating member produces an increasing resistance to any exhaust flow.

## Claims

1. A dual concentric brake valve for controlling the fluid pressure in a primary and a secondary braking circuit, having a valve actuating member (22) which is movable upon the application thereto of an input effort, inlet (12) and exhaust (2, 8) valves operable in response to movement of the actuating member respectively to admit fluid under pressure to an outlet port (21A, 21B) for applying the brakes and to release fluid under pressure from the brake circuit to an exhaust (4), and a balancing piston (11) responsive to differential pressure between the two circuits to match the pressure in the two circuits wherein fluid under pressure from the brake circuit flows via an exhaust passage (3) passing through the balancing piston (11) forming at least a part of the flowpath between the outlet port (21A) and the exhaust (4) characterised in that the valve comprises a variable restrictor (9) which is connected with the actuating member (22) to move the full input effort travel and moves within the exhaust passage (3) thereby to restrict the flow of fluid from the brake circuit.

2. A valve according to claim 1 wherein the restrictor (9) is arranged to restrict the flow of fluid from the brake circuit until the input effort is removed.

3. A valve according to claim 1 or claim 2, wherein the restrictor (9) is arranged coaxially with the exhaust passage (3) through the balancing piston (11) for movement with the actuating member (22) and relative to the balancing piston (11), in the said co-axial direction.

4. A valve according to any one of the preceding claim wherein the restrictor (9) comprises a plunger connected for movement with the actuating member (22) from a retracted position to penetrate with a predetermined clearance gradually more deeply into the exhaust passage (3) communicating with the exhaust (4) so gradually increasing the resistance to the flow therethrough of fluid from the brake circuit.

5. A valve according to any one of the preceding claims wherein the restrictor comprises a tubular plunger (9) having in the walls thereof, windows (24) which in a retracted position provide substantially unrestricted flow to the exhaust (4), and which is movable in response to movement of the actuating member (22) to penetrate gradually more deeply and with a predetermined clearance, the exhaust passage (3) communicating with the. exhaust (4), so gradually increasing the resistance to the flow of fluid from the brake circuit.

## Patentansprüche

1. Konzentrisches Doppelbremsventil zur Kontrole des Druckmitteldrucks in einem primären und einem sekundären Bremskreis, mit einem Ventilbetätigungselement (22), welches beweglich ist, wenn man darauf eine Eingangskraft ausübt, mit Einlaß- (12) und Auslaß- (8) Ventilen, die in Abhängigkeit von der Bewegung des Betätigungselementes betätigbar sind, um einen Auslaßanschluß (21A, 21B) mit unter Druck stehendem Druckmittel zu beaufschlagen, um die Bremsen zu betätigen bzw. um unter Druck stehendes Druckmittel aus dem Bremskreis zu einem Ablaß (4) freizugeben, und mit einem Ausgleichskolben (11), der auf den Differenzdruck zwischen den beiden Kreisen anspricht, um die Drücke in den beiden Kreisen aneinander anzupassen, und in dem unter Druck stehendes Druckmittel von dem Bremskreis über einen Ablaßkanal (3) fließt, welcher durch den Ausgleichskolben (11) hindurchgeht und mindestens einen Teil des Strömungspfades zwischen dem Auslaßanschluß (21A) und dem Ablaß (4) bildet, dadurch gekennzeichnet, daß das Ventil ein variables Drosselelement (9) aufweist, welches mit dem Betätigungslement (22) verbunden ist, um sich über den vollen durch die Eingangskraft hervorgerufenen weg zu bewegen, und welches sich in dem Ablaßkanal (3) bewegt, um dadurch den Druckmittelstrom von dem Bremskreis zu begrenzen.

2. Ventil nach Anspruch 1, bei dem das Drosselelement (9) so angeordnet ist, daß es die Strömung des Druckmittels von dem Bremskreis drosselt, bis die Eingangskraft aufgehoben wird.

3. Ventil nach Anspruch 1 oder 2, bei dem das Drosselelement (9) koaxial zu dem durch den Ausgleichskolben (11) hindurchgehenden Ablaßkanal angeordnet ist, um sich in der koaxialen Richtung mit dem Betätigungslement (22) und relativ zu dem Ausgleichskolben (11) zu begegen.

4. Ventil nach irgendeinem der vorangehenden Ansprüche, bei dem das Drosselelement (9) einen Kolben umfaßt, der mit dem Betätigungselement (22) verbunden ist, um sich mit diesem, ausgehend von einer Position, in der er zurückgezogen ist, zu bewegen und dabei mit vorgegebenem Spiel allmählich immer tiefer in den Ablaßkanal (3) einzutauchen, der mit dem Ablaß (4) in Verbindung steht, um so den Strömungswiderstand für die Druckmittelströmung von dem Bremskreis durch den Ablaßkanal allmählich zu erhöhen.

5. Ventil nach irgendeinem der vorhergehenden Ansprüche, bei dem das Drosselelement eine rohrförmigen Kolben (9) umfaßt, in dessen Wänden Fenster (24) vorgesehen sind, die bei in einer zurückgezogenen Position befindlichem Kolben eine im wesentlichen unbehinderte Strömung zu dem Ablaß (4) gestatten, und der in Abhängigkeit von der Bewegung des Betätigungselements (22) beweglich ist, um allmählich immer tiefer und mit einem vorgegebenen Spiel in den Ablaßkanal (3) einzudringen, der mit dem Ablaß (4) in Verbindung steht, um so den Widerstand für die Druckmittelströmung von dem Bremskreis allmähliche zu erhöhen.

**Revendications**

1. Soupape double concentrique de freinage pour contrôler la pression de fluide dans un circuit primaire et secondaire de freinage, comportant:

— un organe d'actionnement (22) de l'soupape, lequel organe est mobile sous l'action d'un effort d'admission ou d'entrée,

— des soupapes d'admission (12) et l'évacuation (2, 8) manoeuvrables respectivement en réponse aux mouvements de l'organe d'actionnement, de façon à admettre le fluide sous pression dans un orifice de sortie (21a, 21b) pour actionner les freins, et de façon à décharger le fluide sous pression du circuit de freinage vers une évacuation (4),

— et en piston d'équilibrage (11) sensible à la pression différentielle entre les deux circuits de façon à égaler la pression dans les deux circuits dans lesquels s'écoule le fluide sous pression issu du circuit de freinage, par l'intermédiaire d'un passage d'évacuation (3) traversant le piston d'équilibrage (11) et formant au moins une partie du chemin d'écoulement entre l'orifice de sortie (21a) et l'évacuation (4), ladite soupape double concentrique de freinage étant caractérisée en ce qu'elle comprend un limiteur (9) réglable qui est relié à l'organe d'actionnement (22) pour déplacer la course de l'effort d'entrée en totalité, ledit limiteur (9) se déplaçant à l'intérieur du passage d'évacuation (3) de façon à resteindre ou limiter le débit de fluide issu du circuit de freinage.

2. Soupape selon la revendication 1, dans laquelle le limiteur (9) est disposé pour resteindre ou limiter le débit de fluide issu du circuit de freinage jusqu'à ce que l'effort d'entrée soit enlevé.

3. Soupape selon la revendication 1 ou la revendication 2, dans laquelle le limiteur (9) est disposé coaxialement au passage d'évacuation (3) à travers le piston d'équilibrage (11) pour se déplacer avec l'organe d'actionnement (22) et par rapport au piston d'équilibrage (11), dans ladite direction coaxiale.

4. Soupape selon l'une quelconque des revendications précédentes, dans laquelle le limiteur (9) comprend un élément plongeur relié de façon à se déplacer, d'une position rétractée, avec l'organe d'actionnement (22) de façon à pénétrer graduellement plus profondément avec un jeu ou un débattement déterminé à l'intérieur du passage d'évacuation (3) communiquant ave l'évacuation (4), afin d'augmenter graduellement la résistance à l'écoulement du fluide issu du circuit de freinage à travers ledit limiteur.

5. Soupape selon l'une quelconque des revendications précédentes, dans laquelle le limiteur comprend un élément plongeur tubulaire (9) comportant dans ces parois des fenêtres (24) qui, dans une position rétractée, assure un débit sensiblement libre ou non limité vers l'évacuation (4), et qui est mobile en réponse au mouvement de l'organe d'actionnement (22) pour pénétrer graduellement plus profondément, et ce avec un jeu ou un débattement déterminé, dans le passage d'évacuation (3) communiquant avec l'orifice d'évacuation (4), augmentant ainsi graduellement la résistance à l'écoulement du fluide issu du circuit de freinage.

0 1 0 5 7 6 4

FIG. 1.

FIG.2.